# EUROPEAN PATENT SPECIFICATION

(11) **EP 2 297 923 B1**
(45) Date of publication and mention of the grant of the patent: **01.01.2014**
(21) Application number: 09743611.7
(22) Date of filing: 06.05.2009
(51) Int. Cl.: H04L 29/06, H04L 9/08, H04L 9/32, H04W 12/06, H04W 12/04, H04W 4/14, H04W 80/04, H04W 88/06

(54) **AUTHENTICATING A WIRELESS DEVICE IN A VISITED NETWORK**
AUTHENTIFIZIEREN EINER DRAHTLOSEN EINRICHTUNG IN EINEM BESUCHTEN NETZ
AUTHENTIFICATION D UN DISPOSITIF SANS FIL DANS UN RÉSEAU VISITÉ

(30) Priority: 06.05.2008 US 50829; 06.05.2008 US 50845; 05.05.2009 US 436090
(43) Date of publication of application: 23.03.2011
(60) Divisional application: 11004205.8
(73) Proprietor: QUALCOMM Incorporated, San Diego, California 92121 (US)
(72) Inventor: COOK, Bryan, R., San Diego, CA 92121 (US); DYCK, Jeffrey, Alan, San Diego, CA 92121 (US); SALEK, Daniel, San Diego, CA 92121 (US)
(74) Representative: Wagner, Karl H.
(86) International application number: PCT/US2009/043045
(87) International publication number: WO 2009/137625

(56) References cited:
- EP-A- 1 555 843
- WO-A-99/26124
- WO-A-2006/036521
- WO-A-2006/132540
- US-B1- 7 277 416

## Description

### BACKGROUND

### Field

Various features pertain to securing data communications in visited wireless communication networks. At least one feature relates to authenticating a remote device in a visited network via short message service (SMS) or based on a unique identifier for the remote device.

### Background

Wireless communication service providers or carriers often provide services to wireless mobile stations (e.g., mobile phone, etc.) having multiple communication interfaces and operating on various communication channels. For example, a wireless mobile station may be enabled for voice communications on a voice channel, short message services (SMS) for text messaging and data communication. Typically, SMS utilizes the least bandwidth, voice channels utilize an intermediate amount of bandwidth, and data services (e.g., multimedia content streaming) utilize the most bandwidth of the three types of wireless communications. Carriers may sell devices capable of all three types of communications.

Carriers also typically have agreements with other carriers to allow for roaming from one carrier's network to another carrier's network If a user has a service contract with a particular carrier, the network belonging to that carrier is called the home network The network of another carrier is called a visited network.

Security of wireless communications is becoming increasingly important, especially as data services are more widespread. For example, data services may be used for financial transactions, such as, for example, purchasing items over the internet using a mobile phone. Carriers have established systems and methods for securing the wireless communications. If data services are to be used on a wireless communication device, then the security for the data services is provisioned typically when the device is first used for data services. Also, certain events might give rise to a need to generate a new cryptographic key(s) (e.g., data authentication credentials) for security of data services. For example, a carrier might discover that a wireless mobile station is being used for unauthorized data services. In that case, the carrier would want to generate a new cryptographic key(s) for the device.

In most cases, cryptographic keys are provisioned on wireless mobile stations before they are sold. Dynamic Mobile IP Key Update (DMU) allows keys to be generated after they are deployed and automates the key provisioning process for operators. However, a problem can occur when a DMU-enabled wireless mobile station is used for data services for the first time in a visited network or otherwise needs a new cryptographic key(s) while operating in a visited network. In this scenario, the wireless mobile station may be utilized in a visited network before having obtained a valid security or cryptographic key from the home network. Since the wireless mobile station is not yet provisioned for securing data services, or at least not with the correct cryptographic key(s), the data service may be declined by its home network. One reason for this problem is that the visited network may not support the key provisioning process (e.g., DMU) used by the home network to provide the cryptographic key. For example, when the wireless mobile station attempts to establish a data connection with the visited network, the visited network contacts the home network to identify the wireless communication device. However, the wireless mobile station may not have the security/cryptographic key(s) required for data communication, so the home network indicates to the visited network that the wireless mobile station is not authorized to perform data communications. Because the visited network may not support the key provisioning process utilized by the home network for provisioning of the security/cryptographic key to the wireless mobile station, the home network is unable to provide such security/cryptographic key. Thus, a user who has contracted for data services may not be able to use the data services, even though the user should be able to use data services and would be able to use data services if the wireless mobile station had merely obtained the correct security/cryptographic key at least once in the home network before being used for data services in the visited network.

Dynamic Mobile IP Key Update (DMU) is an example of provisioning a cryptographic key(s) to wireless mobile devices. DMU is a secure and efficient, mechanism for distributing and updating Mobile IP cryptographic keys that may be implemented, for example, by Evolution-Data Optimized (EV-DO) for Code Division Multiple Access (CDMA) networks, General Packet Radio Service (GPRS) and Enhanced Data rates for GSM Evolution (EDGE) for Global System for Mobile communications (GSM) networks and Wideband CDMA. The DMU procedure may be implemented between the mobile device and a network Authentication, Authorization, and Accounting (AAA) server and enhances the security of the network by allowing individual user keys and simplifying the updating of keys should one be revealed.

It would be valuable to provide a way to generate and distribute a cryptographic key(s) and other security features to a wireless mobile station even when the wireless mobile station is operating in a visited network that may not support its typical key provisioning process for the home network.

Attention is drawn to document WO 99/26124 which relates to a method, and associated apparatus, improving the authentication security of authentication procedures performed by a wireless host when requesting access to communicate with a host site of a private network. A password is generated by the execution of an application at a processing device of a SIM (subscriber identity module) defined in the GSM Phase 2+ system.

Further attention is drawn to document WO 2006/036521 which relates to a communications system and method of bootstrapping mobile station authentication and establishing a secure encryption key. In the communications network, a distinguished random challenge is reserved for generation of a secure encryption key, wherein the distinguished random challenge is not used for authentication of a mobile station. The distinguished random challenge is stored at a mobile station's mobile equipment and used to generate a secure encryption key, and a bootstrapping function in the network uses a normal random challenge to authenticate the mobile station and the distinguished random challenge to generate the secure encryption key.

Attention is also drawn to document US-B1-7 277416 which relates to the storage of a static address in a node of the network, and the network assigns that one address to the mobile station, every time when the subscriber requests packet data service, for example, using a mobile IP (MIP) type address assignment procedure. The address assignment operation may also provide the home agent address to the station.

Document WO 2006/132540 relates to a method and arrangement for handover between WLANs. By opening the traffic channel (port) while processing the authentification in parallel, the handover delays can be minimized. The traffic channel/access port will first be closed if the authentification process fails.

Finally, document EP-A-1 555 843 relates to a radio communication management method and radio communication management server. When a mobile terminal changes a connection link utilizing HMIPv6, the terminal transmits authentication information together with information (binding update) for changing the link connection with respect to a server (MAP) which manages the link connection of the mobile terminal. The MAP transmits an authentication result together with confirmation information (binding acknowledgment) of the change of the link connection, when making an authentication result with respect to an authentication server to acquire the authentication result. After receiving binding update and authentication information from the mobile terminal, the MAP first sends binding acknowledgment and tentative connection permission, thereafter acquires the authentication result, and may determine whether or not to grant an official connection permission.

### SUMMARY

In accordance with the present invention, a method operational in a home network for authenticating communication services for a wireless mobile station roaming in a visited network, as set forth in claim 1, and a home network node for authenticating communication services for a wireless mobile station roaming in a visited network, as set forth in claim 3, are provided. Further embodiments are claimed in the dependent claims.

Various approaches are provided for a wireless mobile station to update its cryptographic keys while roaming in a visited network that does not support conventional updating of cryptographic keys (such as Dynamic Mobile IP Key Update) for a desired service.

According to a first feature, a method operational on a wireless mobile station is provided for obtaining service from a visited network that does not support the mobile station's typical key update protocol. The mobile station may send a service request to a visited network node to establish a data service requiring authentication from a home network For example, the service request may comprise a Point-to-Point Protocol (PPP) Mobile internet protocol (MIP) registration request (RRQ) message. In response, the mobile station may receive a request on a text messaging channel for a cryptographic key for the data service, where the request is initiated by the home network. The received request may be, for example, a Dynamic Mobile IP Key Update request. The mobile station may obtain or generate the cryptographic key(s) and sends the cryptographic key(s) for the data service on the text messaging channel. The cryptographic key may be sent, for example, as part of a Dynamic Mobile IP Key Update response. In one implementation, the cryptographic key may comprise a mobile internet protocol (MIP) key. The mobile station may send an authentication message with the cryptographic key on the text messaging channel. The cryptographic key may be sent to the home network secured by a public key for the home network. In response, the mobile station may receive an acknowledgement confirming the establishment of the data service. The data service may be performed over a first channel distinct from the text messaging channel. The first channel may have a higher data rate than the text messaging channel.

According to a second feature operational on a home network server, instead of merely rejecting a service request when a cryptographic key for a requesting mobile station is not found at the home network, the home network server may initiate a process by which a text messaging channel is utilized to establish such cryptographic key with the requesting mobile station. A method operational in a home network is provided for authenticating communication services for a wireless mobile station roaming in a visited network. In this method, it is again assumed that the visited network does not support the convention method for the mobile station to establish or update its cryptographic keys with the home network. The home network server may receive a service request from the visited network for a wireless mobile station to establish a data service requiring a cryptographic key. The service request may comprise a Point-to-Point Protocol (PPP) Mobile internet protocol (MIP) registration request (RRQ) message. The home network may determine that a cryptographic key for the wireless mobile station is unavailable at the home network and, consequently, may initiate a key provisioning process by sending the update request. The home network may then send an update request to the wireless mobile station using a text messaging channel to update the cryptographic key. The update request may be a Dynamic Mobile IP Key Update request. In response, the cryptographic key may be received for the data service from the wireless mobile station via the text messaging channel. The cryptographic key may be received as part of a Dynamic Mobile IP Key Update response. The cryptographic key may comprise a mobile internet protocol (MIP) key. The home network may then send a message to the visited network authenticating the service request once the cryptographic key is received. In one example, the service request may be received on a first channel but the update request may be sent on the text messaging channel which is distinct from the first channel. The data service may be performed over a first channel distinct from the text messaging channel. The first channel may have a higher data rate than the text messaging channel.

In an alternative approach, the home network may utilize other information, such as a verifiable identifier or credential for the requesting wireless mobile station (e.g., IMSI, MIN, etc.) along with a roaming status of the requesting wireless mobile station to authenticate the mobile station and a grant a network access to the requested services to the mobile station.

Consequently, another feature provides a method operational on a wireless mobile station for obtaining service from a visited network. The wireless mobile station may send a service request to a visited network node to establish a data service requiring authentication from a home network. In response, the wireless mobile station may receive a message indicating that network access has been granted to the requested service by the home network. However, such access is granted without the mobile station having first established a cryptographic key with the home network. In one example, the service request may include a unique identifier for the wireless mobile station that allows the home network to verify that the mobile station is a subscriber. The service request may also include a visited network identifier that allows the home network to verify that the wireless mobile station is roaming.

Yet another feature provides a method operational in a home network for authenticating communication services for a wireless mobile station roaming in a visited network. The home network (or one or more server or entities therein) may receive a service request from the visited network for the wireless mobile station to establish a data service requiring a cryptographic key. The home network may determine whether a cryptographic key for the wireless mobile station is available at the home network. If no valid cryptographic key is found at the home network for the requested service, but the wireless mobile station is positively verified as a subscriber of the home network and it is roaming in the visited network, then the home network may send a message to the visited network granting network access to the wireless mobile station.

### BRIEF DESCRIPTION OF THE DRAWINGS

The features, nature, and advantages of the present aspects may become more apparent from the detailed description set forth below when taken in conjunction with the drawings in which like reference characters identify correspondingly throughout.

FIG. 1 is a block diagram illustrating a network environment in which one or more features for key provisioning or updating of a mobile station in a visited network may be implemented.

FIG. 2 is a block diagram illustrating how a mobile station may be provisioned with a cryptographic key even when operating in a visited network that may not support a typical key provisioning process for a home network.

FIG. 3 is a diagram illustrating a call flow for enabling a mobile station in a visited network to update a security state, such as an encryption key, via a lower bandwidth protocol, for use on a data communication channel.

FIG. 4 is a diagram illustrating an alternative approach to provisioning a mobile station with data services in a visited network where the mobile station may not be provisioned with the necessary keys typically needed for such data services.

FIG. 5 is a block diagram illustrating an example of a mobile station 200 that may be adapted to update its cryptographic key(s) according to an alternative methodology when roaming in a visited network.

FIG. 6 illustrates a method operational on a wireless mobile station for establishing cryptographic keys with a home network while roaming in a visited network.

FIG. 7 illustrates another method operational on a wireless mobile station for establishing cryptographic keys with a home network while roaming in a visited network.

FIG. 8 is a block diagram illustrating one example of a home network Authentication, Authorization, and Accounting server.

FIG. 9 illustrates a method operational in a home network for authenticating communication services for a wireless mobile station roaming in a visited network.

FIG. 10 illustrates another method operational in a home network for authenticating communication services for a wireless mobile station roaming in a visited network.

FIG. 11 is a block diagram of a Dynamic Mobile IP Key Update server according to one example.

FIG. 12 illustrates a method operational in a Dynamic Mobile IP Key Update server for initiating a key update with a wireless mobile station roaming in a visited network by using a text messaging channel.

### DETAILED DESCRIPTION

In the following description, specific details are given to provide a thorough understanding of the embodiments. However, it will be understood by one of ordinary skill in the art that the embodiments may be practiced without these specific detail. For example, circuits may be shown in block diagrams in order not to obscure the embodiments in unnecessary detail. In other instances, well-known circuits, structures and techniques may be shown in detail in order not to obscure the embodiments.

As used herein, the term "mobile station" may refer to, but is not limited to, a mobile phone, a cellular phone, a communication device, a wireless device, a personal digital assistant, and/or a palm-held computing device having wireless communication capabilities. The term "home network" may refer to a service provider or wireless carrier with which a mobile station is subscribed to receive services. A "visited network" may refer to a service provider or wireless carrier which is not the "home network". The terms "data communications" and/or "data services" may refer to a data channel other than a voice channel and/or a short message service channel.

### Overview

According to one feature, a roaming mobile station may attempt a data connection in a visited network without first having generated cryptographic keys and exchanged them with its home network. The visited network may notify the home network of the request for access to data services. The connection may be rejected by the home network (since the mobile station has not been authenticated for data services), but the home network may trigger or initiate a process to set up an SMS channel with the mobile station through which authentication of the mobile station can provide generated keys to the home network. The home network may generate and send a security update request via the SMS channel (i.e., as part of an SMS message).

The mobile station may be configured to receive the security update request (from the home network) over SMS. The mobile station may recognize properties of an SMS message indicating that the SMS message is a security update request. Instead of interpreting an SMS for the user, as for example, a text message, the mobile station recognizes the SMS as a security update request message. This may be accomplished by using, for instance, a message type flag or other indicator that the SMS message is related to control information (e.g., security update request). The security update request may be a Dynamic Mobile IP key Update procedure (DMU) request. DMU is a mechanism for distributing and updating Mobile IP (MIP) cryptographic keys in some networks.

Upon recognizing that a request message has been received, the mobile station may generate and send an authentication update message via SMS to its home network. The home network then processes the authentication update message to extract the cryptographic keys generated by the mobile station. At the home network, a Home Authentication, Authorization and Accounting server (H-AAA), Home SMS Center (H-SMSC), and DMU Server may be communicatively coupled to achieve initial cryptographic key generation and provisioning. The H-SMSC may also be referred as Message Center (MC), for example, in CDMA2000 networks. For example, the H-AAA may receive an authentication request for a mobile station via the visited network. The H-AAA may reject or deny the authentication request if the mobile station has not previously obtained the appropriate cryptographic keys. However, when such rejection occurs, the H-AAA may also notify the DMU Server which initiates a SMS-based DMU request via the H-SMSC. The mobile station recognizes the received SMS-based DMU request and sends a SMS-based DMU update to the DMU server via the H-SMSC.

### Example Network Environment

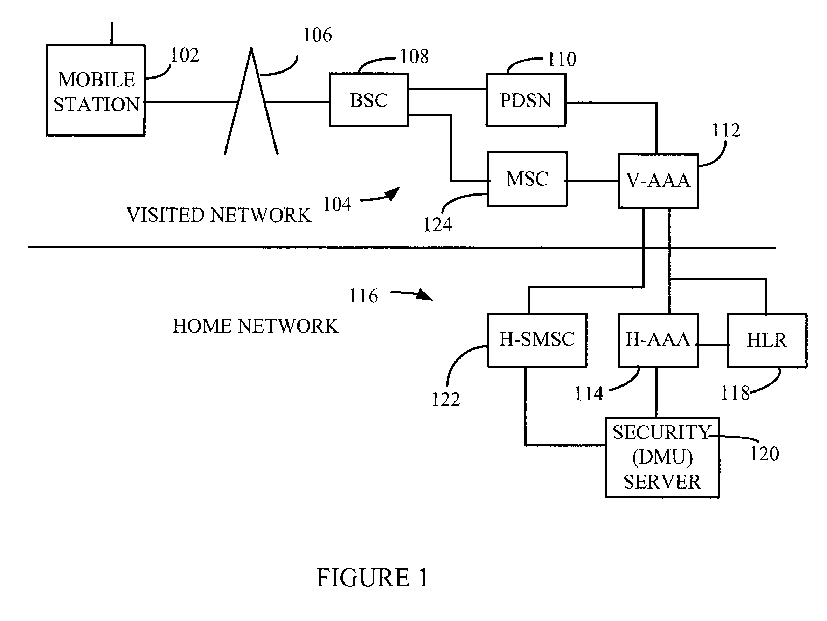

FIG. 1 is a block diagram illustrating a network environment in which one or more features for key provisioning or updating of a mobile station in a visited network may be implemented. The mobile station (MS) 102 may not have been authenticated and/or obtained a valid cryptographic key for data communication services from its home network 116. The mobile station 102 may be roaming in a visited network 104 when it seeks to use the data communication services for the first time, or may have a need for a new cryptographic key. The mobile station 102 may attempt to establish a data connection with a packet data serving node (PDSN) 110 in the visited network 104. As part of the attempt to establish a data connection, or prior to attempting to establish the data connection, the MS 102 perform authentication in the visited network 104. For example, the MS 102 may perform authentication with the Home Location Register (HLR) in the home network 116. In other words, the MS 102 registers with a HLR 118 in the home network 116. Once registered with the HLR 118, the MS 102 is able to perform voice calls and send and receive SMS messages.

To attempt to establish a data connection, the MS 102 creates a Point-to-Point Protocol (PPP) session with the PDSN 110, and may send a Mobile IP (MIP) registration request (RRQ) message. The PPP protocol is an Internet Engineering Task Force (IETF) protocol used to establish direct connections between two network nodes. The BSC 108 routes the messages to a packet data serving node (PDSN) 110. The packet data serving node 110 handles packet data for the mobile stations, such as the MS 102, connected to the BS 106. The PDSN 110 may be connected to the internet (not shown) for routing packet data between the mobile device 102 and the internet, thereby enabling the mobile device 102 to interact with the internet.

The PDSN 110 is also connected to a visited Authentication, Authorization and Accounting server (V-AAA) 112. The V-AAA 112 identifies the MS 102 as not a member of its network. The V-AAA 112 is connected to a home Authentication, Authorization and Accounting server (H-AAA) 114 in the MS's home network 116. The H-AAA 114 identifies the MS 102 and notes that the MS 102 does not have a valid key. The message from the V-AAA to the H-AAA may be a mobile node AAA authorization request (MN-AAA AUTH REQ) message. The H-AAA 114 rejects the request, since the MS 102 does not have a valid key. However, according to one feature, the H-AAA 114 may be configured to notify a security, or key, server 120 that a key update is needed for MS 102 in the visited network 104. The security server 120 may be a Dynamic Mobile IP key Update procedure (DMU) server. DMU is a mechanism for distributing and updating Mobile IP (MIP) cryptographic keys in CDMA2000 networks.

The DMU security server 120 responds to this request for key update in a visited network by starting a key update process over a lower bandwidth channel, for example, over a channel for SMS messaging. Thus, for example, DMU server 120 initiates an SMS message to the MS 102 to create a new key. Specifically, the MS 102 may create the new key, which will be authenticated, or verified, by the H-AAA 114. Therefore DMU server 120 sends a key update request to the MS 102 by SMS. The key update request may be, for example, a short message peer-to-peer message (SMPP) with the content stating "key update request" or something similar, such as, for example, "DMU request". So DMU server 120 sends the "DMU request" message to a short message service center (SMSC) 122 to be sent to the MS 102. The DMU server 120 may encrypt the message with a public key corresponding to the MS 102.

The SMSC 122 routes the encrypted SMS message "DMU request" to the MS 102. The V-AAA 112 continues the routing of the SMS message to the MS 102 by sending it to a mobile swiching center (MSC) 124. The MSC 124 routes the SMS message to the MS 102 by sending it to the BSC 108, which sends the message to the BTS 106, which sends the SMS message over the air to the MS 102. The MS 102 receives the encrypted message, decrypts the message and responds by creating a new key. The MS 102 generates an encrypted message including the new key encrypted with the network's public key. The MS 102 sends the encrypted message back to the DMU server by SMS message. The encrypted message including the new key may be a DMU update message.

The DMU update message may be the exact message that would be used over a data channel, but instead it is sent by SMS. SMS message have a maximum of 160 bytes. The new key generated may be a Rivest Shamir Adleman (RSA) 1024 key, which is 120 bytes in length. If a longer key length is desired, then multiple SMS messages are used. A fragmentation protocol is used on top of the DMU SMS message. Multiple SMS messages may be used to carry the DMU message.

The SMSC 122 receives the encrypted new key and forwards it to the DMU server 120. The DMU server 120 forwards the new key to the H-AAA 114. The H-AAA 114 decrypts the new key and may generate an authentication acknowledgement based on at least in part on the encrypted message from the MS 102. The H-AAA 114 may respond to the DMU server 120 with a special access reject message, and the DMU server 120 sends a DMU Update message to the MS 102. The MS 102 may then communicate with the PDSN 110 using the new key which has been established by the authenticated H-AAA 114.

### Security Provisioning in Visited Networks

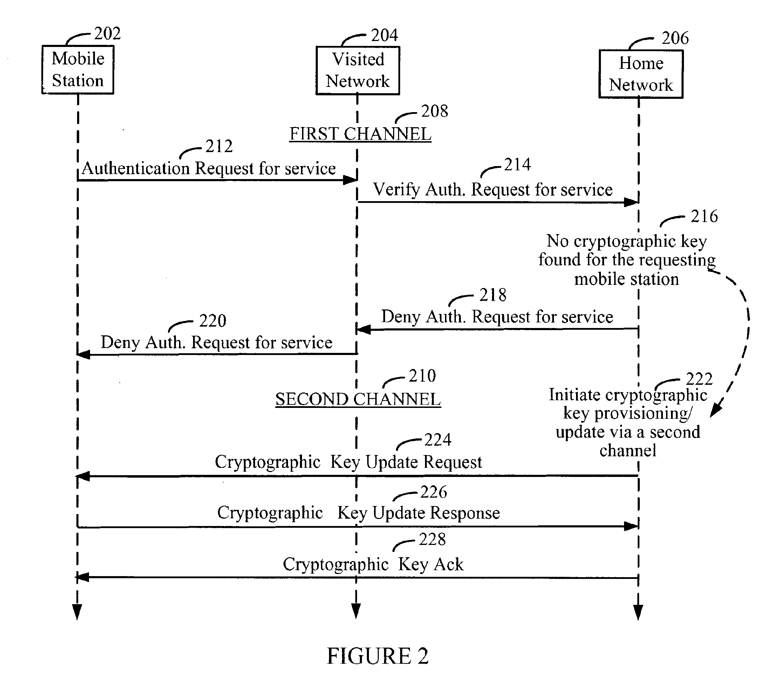

FIG. 2 is a block diagram illustrating how a mobile station 202 may be provisioned with a cryptographic key even when operating in a visited network 204 that may not support a typical key provisioning process for a home network 206. In some circumstances, a user may purchase a wireless mobile station 202 (e.g., mobile phone, personal digital assistant, palm held computing device, communication device, etc., that includes wireless communication capabilities) intended for use with a first network (e.g., user's home network 206). However, before it is activated with the first network 206, the wireless mobile station 202 may be moved to a second region where a second network operates (e.g., visited network 204). Because it has not been fully activated by its home network 206, the mobile station 202 may not have obtained cryptographic and/or security keys for certain communication or data services. A similar problem may occur if a current cryptographic or security key is voided by the home network 206 without informing the mobile station 202 of such key update. When the wireless mobile station 202 attempts to access certain services, for example data services (e.g., surfing the internet, etc.) in the visited network 204 the mobile station 202 may be denied access, because the mobile station 202 may not have valid authentication from its home network 206 for that service (e.g., it may not yet have obtained a security or cryptographic key(s)). For example, upon starting operation in the visited network 204, the mobile station 202 may send an authentication request 212 for a particular service over a first channel 208. The visited network may seek to verify the authentication request by forwarding the request 214 to the home network 206 for the mobile station 202. The home network 206 may ascertain that it cannot authenticate the mobile station 202 for the requested service, e.g., because no security/cryptographic key has been provided 216 to the mobile station 202 for such service. Consequently, a denial of authentication request 218 may be sent from the home network 206 to the visited network 204 and forwarded 220 to the mobile station 202.

However, a pre-provisioned second channel 210, such as a SMS channel, can be used by the mobile station 202 to establish the authentication with the home network 206 in order to obtain a security/cryptographic key and other security features for the data service or channel. Consequently, when the home network 206 denies the authentication request, it may also initiate a security/cryptographic key provisioning and/or update process 222 over the second channel 210. The home network may ascertain that, when an authentication request from a visited network is denied, a key provisioning process should be initiated over the second channel 210. Such key provisioning process may include using the second channel 210 to send a security/cryptographic key update request 224 to the mobile station 202 (possibly via the second network 204). In response, the mobile station 202 may generate a security/cryptographic key and sends it to the home network via a security/cryptographic key update response 226. The home network 206 may then authenticate the security/cryptographic key and sends an acknowledgement 228 to the mobile station 202 via the second channel 210. The security/cryptographic key can then be used to provide authentication/security services via the first channel 208. That is, the security/cryptographic key may then be used by the mobile station 202 to attempt to establish a service session over the first channel 208. For instance, the mobile station 202 may again send an authentication request, but this time, the home network 206 successfully verifies the request since a cryptographic key for the mobile station 202 has been established. Consequently, the mobile station 202 is can to establish a communication session via the first channel.

Since the pre-provisioned second channel 210, such as an SMS channel, is used to provision the security features for the first channel 208, a user may use the wireless mobile station 202 for data services (over the first channel) even if it has not yet been provisioned with security/cryptographic keys for such data services by the home network 206. Note that this key provisioning process may be used even if the mobile station 202 is used for the first time in the visited network 204. This results in reduced frustration to users and increased use of data services.

Note that while the first channel 208 may be secured (e.g., requiring some provisioned key for communications or services thereon), the second channel 210 may be utilized with little or no authentication or security. According to some implementations, the first channel 208 may be a high bandwidth channel used for data services and, the second channel 210 is a lower bandwidth channel relative to the first channel 208. The data service or first channel could be for code division multiple access (CDMA) communications, such as, for example, a CDMA2000 Evolution-Data Optimized (EV-DO) communication, which is standardized by the 3^{rd} Generation Partnership Project 2 (3GPP2). As another example, the communication service or first channel could be a binary runtime environment for wireless (BREW™) service or application. BREW™ is a proprietary mechanism developed by Qualcomm Incorporated™ for manipulating software on a wireless communication device.

In yet other implementations, the first channel 208 may simply be a low bandwidth control channel associated with a higher bandwidth third channel that provides the desired data services.

According to one example, the wireless mobile station 202 may be a data-enabled cellular telephone purchased from Carrier A for use on Carrier A networks and other networks. For example, Carrier A could be Verizon Wireless™. If the user has purchased the cellular telephone in the United States and signed up for international roaming, then the user may want to use the device in Canada or Europe, for example. In some cases, the user may take the cellular telephone to Canada or Europe even before it has been authenticated by the home network (in the United States) for data services (e.g., internet, browsing, etc.). Thus, when the user attempts to use the mobile station in another network, Carrier B, the mobile station attempts to initialize the data service. For example, Carrier B may be Telus™ in Canada. If Carrier A and Carrier B have a roaming agreement, then the user will typically be able to get voice services and SMS services even though data services may not be provisioned. According to one feature, the process illustrated in FIG. 2 may be utilized to provide one or more keys to the mobile station for data services. Such provisioning of data services (e.g., over a first channel 208) may be performed over SMS messaging (e.g., second channel 210). For example, while service option 33 (SO33) may be used to perform a DMU update in a Verizon Wireless network (e.g., using a CDMA2000 1xRTT data session), such option may not be available in foreign networks; therefore the DMU update may instead be performed via SMS messaging. For instance, if Carrier B does not have the capability to do a Dynamic Mobile IP Key Update (DMU), the cryptographic key and other security feature updating can still be performed via the SMS channel by using SMS messages, assuming Carrier A and Carrier B have a SMS roaming agreement.

### Example of DMU Provisioning Over SMS

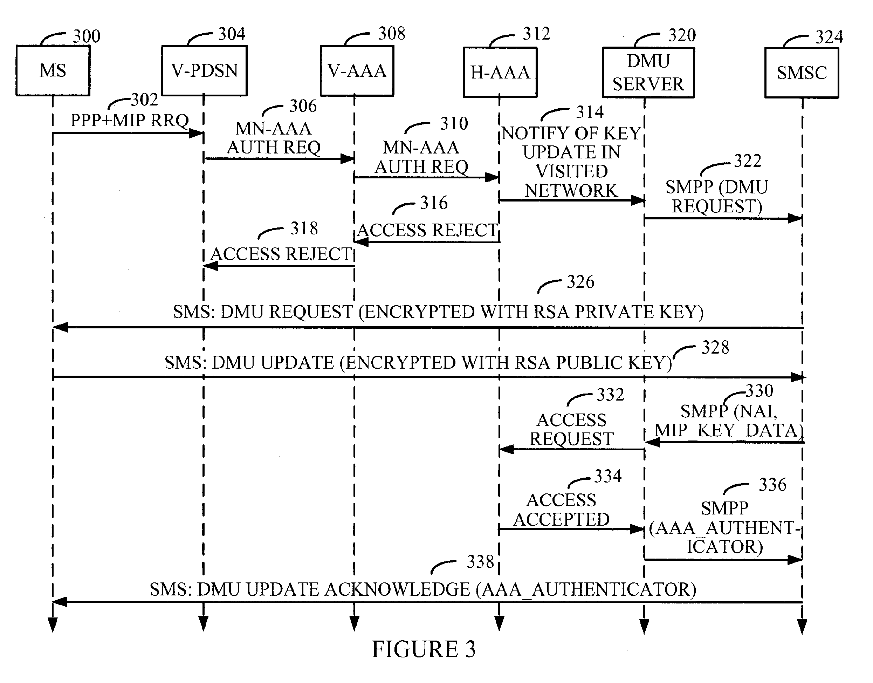

FIG. 3 is a diagram illustrating a call flow for enabling a mobile station 300 in a visited network to update a security state, such as an encryption key, via a lower bandwidth protocol, for use on a data communication channel. The concepts described herein may use the example of an EV-DO data communication, though other implementations are possible and contemplated. A mobile station (MS) 300 attempts to initiate a data communication while in a visited network. The attempt may be a PPP+MIP RRQ message 302 to a VPDSN 304, as described above with respect to FIG. 1. The V-PDSN 304 communicates a MN-AAA AUTH REQ 306 to a V-AAA 308. The V-AAA 308 communicates the MN-AAA AUTH REQ 310 to a H-AAA 312. The H-AAA 312 looks up the MS 300 in a credential list and determines that MS 300 does not have a valid cryptographic key. Consequently, the H-AAA 312 sends access reject message 316 to V-AAA, which sends an access reject message 318 to V-PDSN 304, thereby preventing the MS 300 from obtaining the desired data service.

However, along with sending the access rejection message 316, the H-AAA 312 may also initiate a process of generating a new security/cryptographic key by sending a message 314 notifying a DMU server 320 that a key update is needed for MS 300 in the visited network. The DMU server 320 responds by initiating an SMS message 322 for a DMU update (request) to the MS 300. The message is sent to a SMSC 324, which routes the message 326 to the MS 300. The MS 300 receives the SMS message, which includes an encrypted request for a key update. For example, the request 326 may be encrypted with a Rivest Shamir Adleman (RSA) private key having a corresponding public key. The MS 300 may generate new cryptographic keys and an authenticator, encrypts the new keys and authenticator with the network's public key, and sends a message 328 with the encrypted keys and authenticator back to the H-AAA 312 via the SMSC 324 and the DMU server 320. For example, the MIP key data for the MS 300 may be encrypted by the MS 300 with the network's public key. The H-AAA 312 has the corresponding private key, so it can decrypt the encrypted message. The SMSC 324 forwards the message 330 to the DMU server 320, which forwards the message 332 to the H-AAA 312. The H-AAA 312 may decode the new keys and/or authenticator in the message by utilizing its private key. The H-AAA 312 may then send the authenticator along with an access accepted message 334 to the DMU server 320. The DMU 320 forwards the access accepted message and authenticator 336 to the SMSC 324 which forwards the authenticator 338 to the MS 300 (e.g., as part of DMU Acknowledge message 338). Upon receiving the authenticator, the MS 300 can verify that the H-AAA 312, which requested the new key generation, is authentic, since only an entity with the correct private key could have decrypted the new key message 328 correctly and correctly obtained or extracted the authenticator. Accordingly, even without using the data communication channel to obtain an updated cryptographic key, the MS 300 can be certain that the updated encryption key is authentic and safe to use in communication with V-PSDN 304 for communicating with the internet.

Systems and methods described herein allow updating of keys (e.g., MIP keys, security keys, cryptographic keys, etc.) without having to modify a visited AAA server. The keys may be generated by the MS or the MS in combination with the home network and provided to the DMU server via SMS messaging.

In one example, the authenticator is included in the DMU Acknowledge message 338 and ensures that the keys were updated. It indicates to the MS 300 that the keys were updated and that the authentic network did the updating. Only the correct entity would be able to extract the keys from the DMU Update message 328 (e.g., using the network's private key) and replied with the correct authenticator.

The examples illustrated herein have largely described DMU key updates, but any key data sent by a MS could be used. For instance, application layer keys may be updated by the procedures described herein.

Further, the examples illustrated herein have largely described using SMS to update keys for a data communication, but the ideas are applicable to other communication protocols. Any protocol that has been provisioned can be used to update the security features of a communication protocol that has not been provisioned.

The methods described herein may be applied whenever a communication provider or carrier is providing a type of service that is secured by its own keys, and that service cannot be accessed while roaming in a visited network unless the mobile station is granted certain keys, and the mobile station has not been provisioned with the keys by the home network. In some implementations, these methods may only be applied when the mobile station roams into a foreign network (e.g., a CDMA network) and not when it is within its home network (e.g., a GSM network).

### Example of Data Roaming IMSI Check Without Authentication Credentials

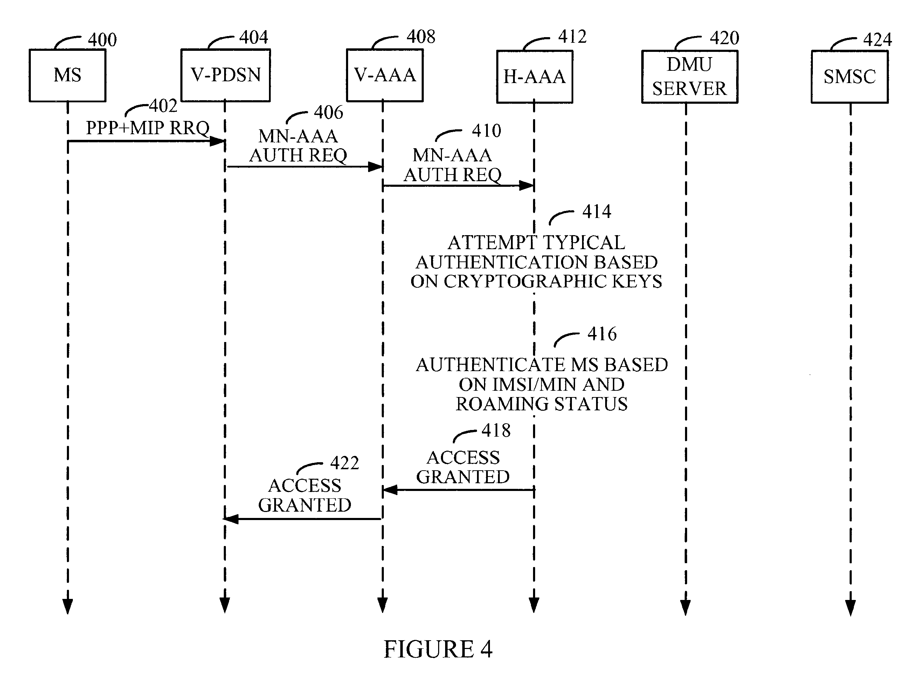

FIG. 4 is a diagram illustrating an alternative approach to provisioning a mobile station with data services in a visited network where the mobile station may not be provisioned with the necessary keys typically needed for such data services. The initial steps of this approach are similar to those of FIG. 3. In this approach, the mobile station 400 may not have MIP authentication credentials, such as utilized for MN-AAA and/or Mobile Network Home Agent (MN-HA) authentication. The International Mobile Subscriber Identity (IMSI) or mobile identification Number (MIM) (or equivalent) for the mobile station 400 may be utilized by the home network to grant access to the mobile station without establishing cryptographic keys. Once access to the network is granted access, cryptographic keys may be established between the DMU server and the mobile station.

Like in FIG. 3, the mobile station (MS) 400 attempts to initiate a data communication while in a visited network. The attempt may be a PPP+MIP RRQ message 402 to a VPDSN 404, as described above with respect to FIG. 1. The V-PDSN 404 communicates a MN-AAA AUTH REQ 406 to a V-AAA 408. The V-AAA 408 communicates the MN-AAA AUTH REQ 410 to a H-AAA 412. This MN-AAA AUTH REQ 410 may include blank packet data authentication credentials (e.g., default credentials or invalid credentials). The MN-AAA AUTH REQ 410 may also include an International Mobile Subscriber Identity (IMSI) or a Mobile Identification Number (MIN) for the mobile station 400. The IMSI or MIN may be originally obtained, for example, from an airlink record from the MS 400. Additionally, the MN-AAA AUTH REQ 410 may also include a Carrier-ID for the visited network.

First, upon receiving the authentication request 410, the H-AAA 412 may attempt to perform a typical authentication of the MS 400 based on the cryptographic keys 414. Because, the MS 400 has not yet obtained such keys from the DMU server 420, this typical authentication will fail. However, the H-AAA 412 may be further configured to perform an alternative authentication procedure where the MS 400 may be authenticated based on IMSI/MIN and the current roaming status 416 of the MS 400.

In this approach, the H-AAA 412 uses the Carrier-ID to ascertain that the requesting MS 400 is roaming in the visited network. When receiving this request, the H-AAA also looks up the MS 400 in a credential list and determines that MS 400 does not have a valid cryptographic key (e.g., it has not performed DMU yet). Rather than rejecting the request as in FIG. 3, the H-AAA 412 may allow the data service request to proceed based on the IMSI or MIN and the fact that the request indicates that the MS 400 is in a visited network which does not support DMU. That is, the H-AAA 412 may determine that the MS 400 is a subscriber of the home network based on the IMSI or MIN received in the request 410. Additionally, since it is ascertained that the MS 400 has roamed into a visited network, the H-AAA 412 may use this information to allow the data service request to proceed or be granted. Consequently, the H-AAA 412 may authenticate the MS 400 based on the IMSI or MIN and the fact that it is roaming. Such authentication may occur even if the MS 400 does not provide the correct authentication credentials (e.g., a MN-AAA password or MN-HA password). Note that because the IMSI or MIN come from the airlink (from the MS 400 to visited network base station), it is not possible to spoof since the Home Location Register (HLR) authentication would fail.

Upon performing this alternative authentication procedure, the H-AAA sends an access granted message 418 and 422 to the visited network. This allows the mobile station 400 to be granted the requested service. In one example, this access may be a temporary access which allows the MS 400 to operate and have access through the V-PDSN 404. However, once the MS 400 is operational within the home network, it must still establish its cryptographic keys with the DMU server 420.

### Example Mobile Station

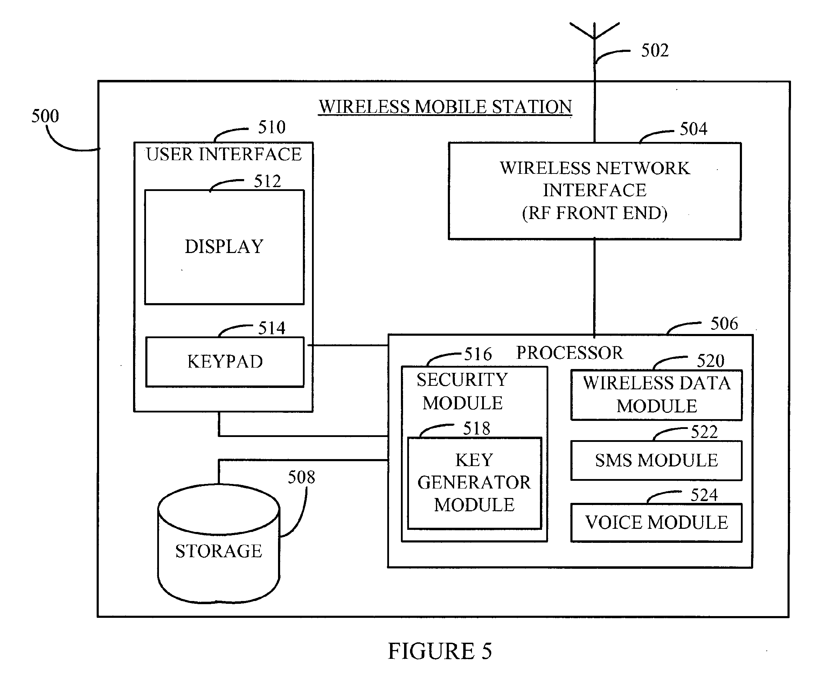

FIG. 5 is a block diagram illustrating an example of a mobile station 500 that may be adapted to update its cryptographic key(s) according to an alternative methodology when roaming in a visited network. The mobile station 500 may include an antenna 502 for transmitting and receiving wireless communications over the air. A wireless network interface 504 (e.g., Radio Frequency (RF) front end) may include a modulator for modulating digital signals onto an RF signal and a demodulator for demodulating received RF signals to digital signals. The network interface 504 may be coupled to a processor 506. The processor 506 may include at least two communication modules, namely, a wireless data communication module 520, a voice communication module 524, and/or a low bandwidth communication module, such as a SMS module 522. The communication modules may be adapted to perform the SMS and data communication functions described above with respect to FIGS. 1 - 4. For example, the wireless data module 520 may initiate the request for data services described above. Further, the SMS module 522 may receive the SMS DMU update request sent by the home network DMU server 120 and replies with a DMU Update message via SMS.

The processor 506 may also include a security module 516. The security module 516 may be adapted to secure communications between the mobile station 500 and other entities. The security module 516 may encrypt messages for mobile station 500 in addition to updating cryptographic keys as necessary and authenticating other entities and performing other related tasks. The security module 516 may include a key generator module 518. The key generator module 518 may generate new cryptographic or security keys as necessary. For example, the key generator module 518 may generates a new key requested by DMU server 120, described above with respect to FIG. 1. The mobile station 500 may also include a storage device 508 for storing data and instructions for the mobile station 500. For example, the content of communications with other entities may be stored in the storage device 508. For example, the DMU update request received by SMS may be stored in storage 508. The mobile station 500 may also include a user interface 510 for displaying or playing output, such as audio, video and text, to a user, and for receiving input from the user. The user interface 510 may include a display 512 for displaying video, images and text to the user. The user interface 510 may include a keypad 514 for receiving input from the user. Other user interface devices, such as a speaker, a microphone are not shown, but may be included on mobile station 500.

When seeking to establish data services while in a visited network, the mobile station 500 may not yet have obtained the necessary keys for authentication with its home network. Consequently, mobile station 500 may be configured to perform one or more alternative methods that allow it to obtain data services while roaming a visited network and without having previously been authenticated by the home network for such services.

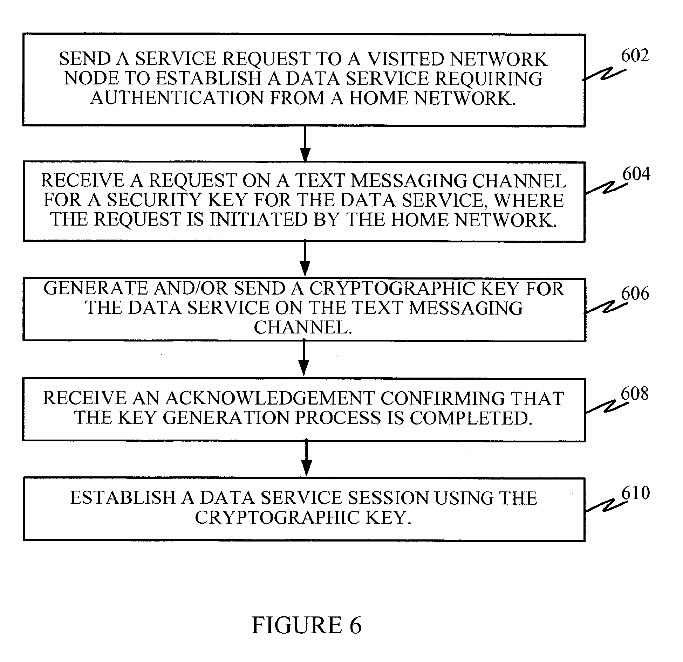

FIG. 6 illustrates a method operational on a wireless mobile station for establishing cryptographic keys with a home network while roaming in a visited network. In this method, it is assumed that the mobile station may not have obtained or established the necessary cryptographic or security keys for a desired service. This method may operate on a mobile station, such as the mobile station 500 illustrated in FIG. 5, which has roamed into a visited network. The visited network may not support the typical key provisioning process utilized by the home network to establish keys with its mobile stations.

While roaming in the visited network, the mobile station may send a service request to a visited network node to establish a data service requiring authentication from a home network 602. The service request may comprise MIP registration request sent over the Point-to-Point Protocol (PPP).

In response, a request may be received on a text messaging channel for a cryptographic key for the data service, where the request is initiated by the home network 604. The received request may be a Dynamic Mobile IP Key Update request. In this approach, the mobile station may be adapted to monitor the text messaging channel for messages having a message type or code that indicates it is a cryptographic key request. Knowing that such a message may be received over the text messaging channel, the mobile station may monitor such channel.

The mobile station may then generate and send a cryptographic key for the data service on the text messaging channel 606. The cryptographic key may, for example, comprise or is based on a mobile internet protocol (MIP) key. The cryptographic key may be sent as part of an authentication message with the cryptographic key over the text messaging channel. For instance, the cryptographic key may be sent as part of a Dynamic Mobile IP Key Update response.

In response, an acknowledgement may be received by the mobile station confirming that the key generation process is completed 608. The mobile station may then again attempt to establish the data service session using the cryptographic key 610.

Note that the data service may be performed over a first channel distinct from the text messaging channel. The first channel may have a higher data rate than the text messaging channel.

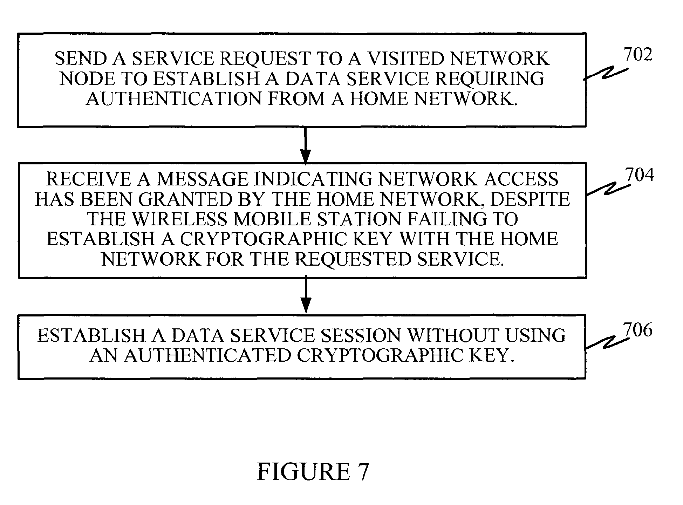

FIG. 7 illustrates another method operational on a wireless mobile station for establishing cryptographic keys with a home network while roaming in a visited network. In this method, the mobile station is "authenticated" by the home network based on its credentials and its roaming status, without first having established its cryptographic key(s). While roaming in the visited network, the mobile station may send a service request to a visited network node to establish a data service requiring authentication from a home network 702. The request may include a unique identifier or credentials for the wireless mobile station, such as an IMSI or MIN, which allows the home network to verify that the wireless mobile station is in fact a subscriber of the operator of the home network. Additionally, the request (or message forwarded by the visited network) may also include an identifier of the visited network that allows the home network to verify that the wireless mobile station is in fact roaming and/or in a visited network that does not support its typical key update protocol.

In response, a message may be received indicating that network access has been granted by the home network, despite the wireless mobile station failing to establish a cryptographic key with the home network for the requested service 704. The home network may ascertain or grant such access based on identifying the mobile station as a legitimate subscriber and ascertaining that it is roaming in another network. This response message may grant access for the mobile station to communicate over the visited network. Consequently, the mobile station may establish a data service session without using an authenticated cryptographic key 706. However, in one example, the granted network access may be temporary or limited to the visited network since the mobile station has not yet established its cryptographic key with the home network. Therefore, when the mobile station is again operating within the home network, it will need to establish its cryptographic key for the data service.

### Example Home Network AAA Server

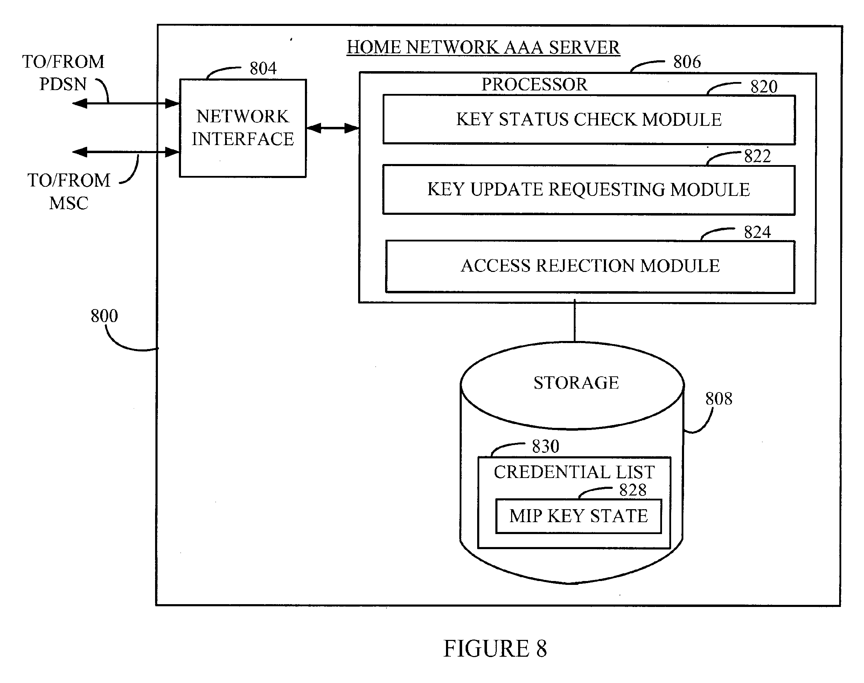

FIG. 8 is a block diagram illustrating one example of a home network AAA server 800. The H-AAA 800 may include a network interface 804 for communicating with other networks, such as a visited network and other servers in the home network, such as a DMU server. The network interface 804 may be coupled to a processor 806 which may include a key status check module 820, a key update requesting module 822 and an access rejection module 824. The key status check module 820 may receive a request for a data service authentication from a visited or foreign network in which a mobile station (that is a subscriber of the home network) is roaming. The server 800 may check whether the requesting mobile station has a valid cryptographic key. The request for a data service authentication may include identification of the requesting mobile station, such as, for example, an electronic serial number (ESN), an IMSI, and/or a MIN.

The H-AAA server 800 may also include a storage device 808 in which a credential list 830 may be stored. The credential list 830 may store credentials for the users or subscribers of the home network. Such credential list 830 may indicate, among other things, a key state 828 for the subscribers. In one example, the key state 828 may be a MIP key state. The MIP key state may indicate whether each mobile station has a current or valid cryptographic key. Such cryptographic key may be associated with a particular type of service, so that different services may have different keys. The key status check module 820 may search for and/or find the key status for the requesting mobile station in the credential list 828 to determine whether requesting mobile station has a valid cryptographic key for the requested service. If the MIP key state 828 for the requesting mobile station indicates that the mobile station does not have a valid cryptographic key for the desired service, then the key status check module 820 may trigger a key provisioning process.

In a first approach, illustrated in FIG. 8, the H-AAA server 800 may initiate a process by which a text messaging channel is utilized to establish such cryptographic key with the requesting mobile station. Such text messaging channel may be distinct from the channel for the requested service. Upon finding out that the requesting mobile station has no valid cryptographic key, an access rejection module 824 may generate an access denied message, which may be sent to the visited network over the network interface 804. Additionally, a key update requesting module 822 may be adapted to also initiate and/or send a key update request (via the text messaging channel) to the requesting mobile station to obtain the cryptographic key.

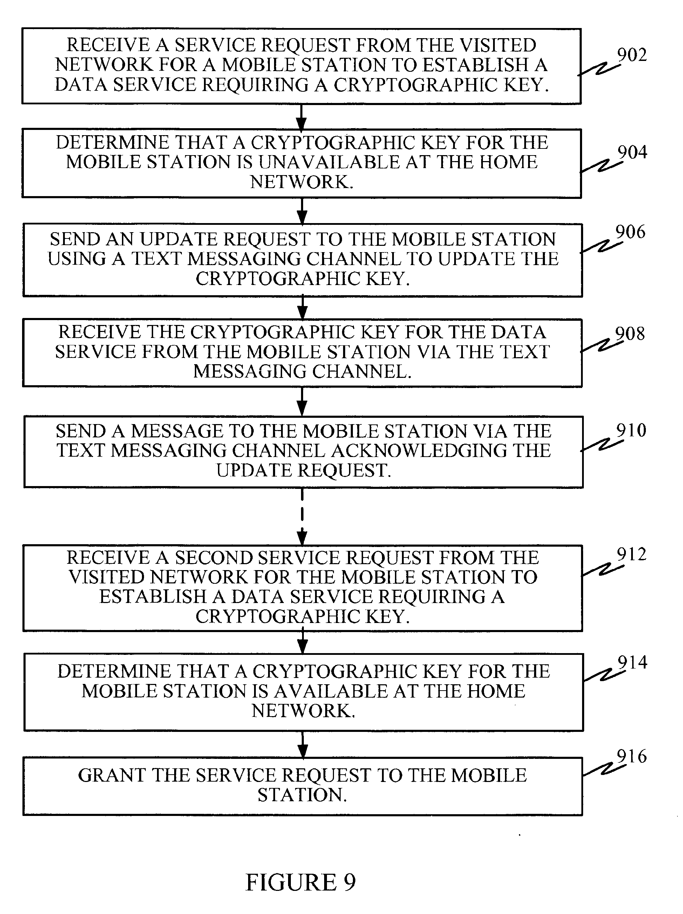

In a second approach, illustrated in FIG. 9, the H-AAA server 800 may use other information, such as a verifiable identifier for the requesting mobile station (e.g., IMSI, MIN, etc.) along with a roaming status of the requesting mobile station to authenticate the mobile station. That is, even without initiating a process to obtain a cryptographic key (as in the first approach), the H-AAA server 800 may nonetheless respond with an access granted message if it can verify that the mobile station identifier (IMSI/MIN) is for a valid subscriber, that the mobile station has not previously obtained a valid cryptographic key, and that the mobile station is roaming in a visited network.

FIG. 9 illustrates a method operational in a home network for authenticating communication services for a wireless mobile station roaming in a visited network. This method may be operational in one or more servers or nodes of the home network (e.g., H-AAA, DMU server, H-SMSC, etc.).

A service request may be received from the visited network for a mobile station to establish a data service requiring a cryptographic key 902. The service request may comprise a Point-to-Point Protocol (PPP) Mobile internet protocol (MIP) registration request (RRQ) message.

The home network may determine that a cryptographic key for the mobile station is unavailable at the home network 904. Consequently, the home network may initiate a key provisioning process by sending an update request to the mobile station. This may involve sending an update request to the mobile station using a text messaging channel to update the cryptographic key 906. For example, an SMS message may be utilized since SMS channels may be provisioned without the need for authentication of cryptographic keys. The update request may be a Dynamic Mobile IP Key Update request. In response, the home network may receive the cryptographic key for the data service from the mobile station via the text messaging channel 908. In one example, the cryptographic key may comprise, or may be based on, a mobile internet protocol (MIP) key. The cryptographic key may be received as part of a Dynamic Mobile IP Key Update response. Subsequently, the home network may send a message to the mobile station via the text messaging channel acknowledging the update request 910.

Subsequently, the home network may receive a second service request from the visited network for the mobile station to establish a data service requiring a cryptographic key 912. The home network can now determine that a cryptographic key for the mobile station is available at the home network 914. Consequently, the home network may grant the service request to the mobile station 916.

Note that the service request may be received on a first channel but the update request is sent on a second channel (i.e., the text messaging channel) which is distinct from the first channel. In some implementations, the data service may be performed over a data channel distinct from the text messaging channel. The data channel may have a higher data rate than the text messaging channel.

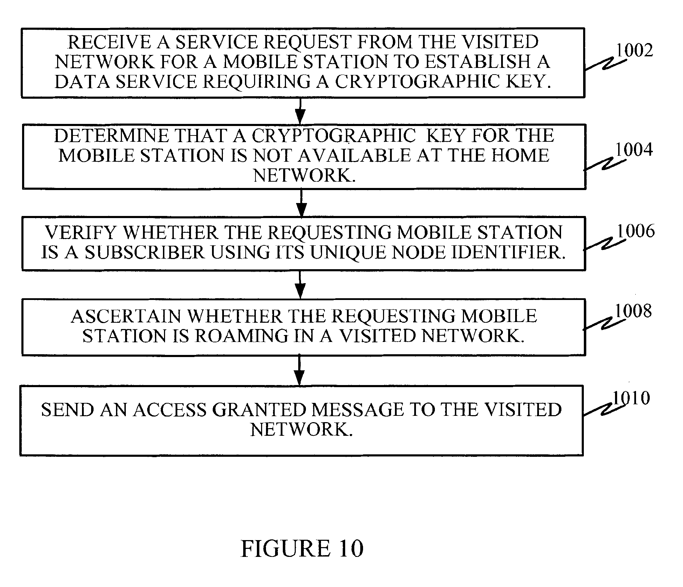

FIG. 10 illustrates a method operational in a home network for authenticating communication services for a wireless mobile station roaming in a visited network. Rather than initiating an alternative authentication process, as in FIG. 9, the home network may instead utilize other information to perform authentication for purposes of the requested service. A service request may be received from the visited network for a mobile station to establish a data service (on a visited network) requiring a cryptographic key 1002. Note that the received service request may include a network identifier for the visited network and a unique node identifier or credential for the mobile station. The home network may determine that a cryptographic key for the mobile station is not available at the home network 1004. Additionally, the home network may verify whether the requesting mobile station is a subscriber of the home network by using its unique node identifier or credential. For instance, a unique node identifier or credential (e.g., IMSI or MIN) for the mobile station may be received as part of the service request. This unique node identifier or credential may be compared to a list of known subscribers for the home network to make this determination. The home network may further ascertain whether the requesting mobile station is roaming in a visited network 1008. If no valid cryptographic key associated with the mobile station is found but the requesting roaming mobile station is a subscriber of the home network, then an access granted message may be sent by the home network to the visited network 1010.

Granting access to the mobile station may mean that the mobile station has (limited or unlimited) access to services on the visited network for a limited or unlimited amount of time. According to one implementation, once the mobile station again operates within the home network (or another network that supports DMU) then it must establish its cryptographic key(s) with the home network.

### Example Home Network DMU Server

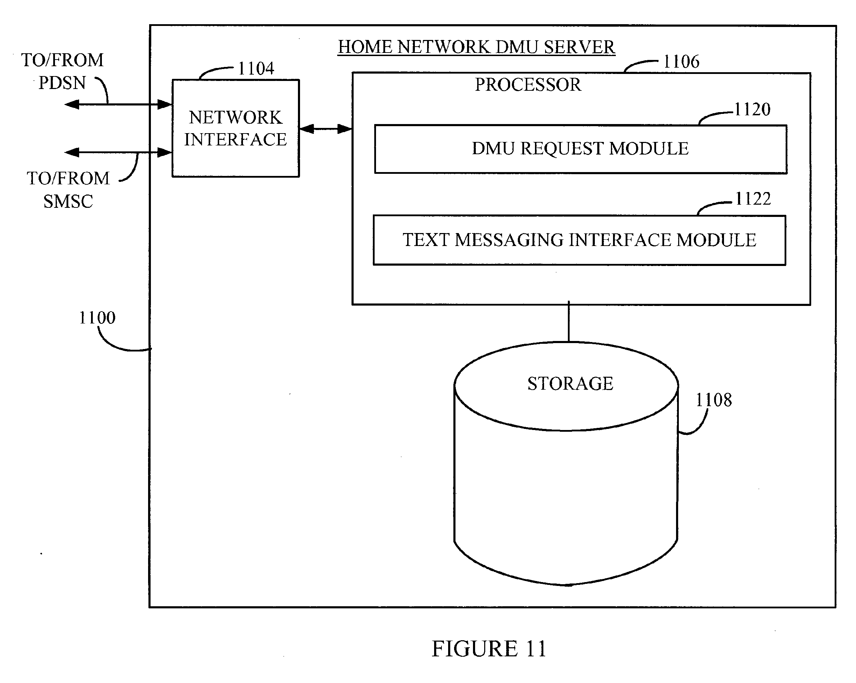

FIG. 11 is a block diagram of a DMU server 1100, such as the DMU server 120 shown and described with respect to FIG. 1. The DMU server 1100 has a network interface 1104 for communicating with the H-AAA 114 and with the SMSC 122. The network interface 1104 is connected to a processor 1106 which includes a DMU request module 1120 and a text messaging interface module 1122 (e.g., SMSC module). The DMU server 1100 may be adapted to receive a key update request for a mobile station in a visited network. In response, the DMU server 1100 may generate a DMU request to be sent to the mobile station. The request generated by DMU request module 1120 may be sent to the text messaging interface module 1122, which packages the request in an SMS message to be sent to an SMS center for the home network. In response, the DMU server 1100 may receive a DMU update message with a cryptographic key from the mobile station. The DMU may then update its credential list to reflect that the mobile station now has a valid cryptographic key. In one example, the cryptographic key may be a MIP key or may be based on a MIP key.

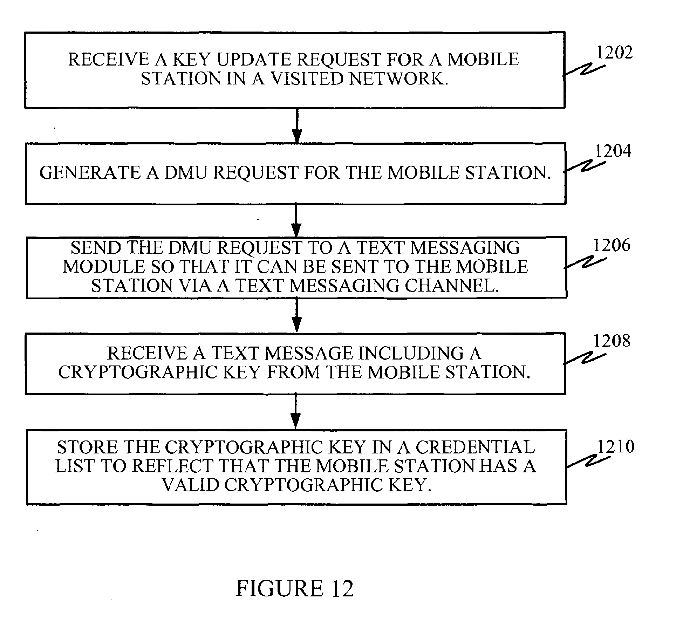

FIG. 12 illustrates a method operational in a DMU server for initiating a key update with a wireless mobile station roaming in a visited network by using a text messaging channel. This method may assume that the visited network does not support updating of keys for a desired service using DMU directly. Consequently, an alternative approach may be utilized where DMU updating may be performed via a text messaging channel instead. A key update request for a mobile station in a visited network may be received by the DMU server 1202. The DMU server may then generate a DMU request for the mobile station 1204. The DMU request may be sent to a text messaging module so that it can be sent to the mobile station via a text messaging channel 1206. In response, the DMU server may receive a text message including a cryptographic key from the mobile station 1208. The DMU server may store the cryptographic key in a credential list to reflect that the mobile station has a valid cryptographic key 1210.

It should be recognized that, generally, most of the processing described in this disclosure may be implemented in a similar fashion. Any of the circuit(s) or circuit sections may be implemented alone or in combination as part of an integrated circuit with one or more processors. The one or more of the circuits may be implemented on an integrated circuit, an Advance RISC Machine (ARM) processor, a digital signal processor (DSP), a general purpose processor, etc.

Also, it is noted that the embodiments may be described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

As used in this application, the terms "component," "module," "system," and the like are intended to refer to a computer-related entity, either hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets (e.g., data from one component interacting with another component in a local system, distributed system, and/or across a network such as the Internet with other systems by way of the signal).

Moreover, a storage medium may represent one or more devices for storing data, including read-only memory (ROM), random access memory (RAM), magnetic disk storage mediums, optical storage mediums, flash memory devices and/or other machine readable mediums for storing information. The term "machine readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, or any combination thereof. When implemented in software, firmware, middleware or microcode, the program code or code segments to perform the necessary tasks may be stored in a machine-readable medium such as a storage medium or other storage(s). A processor may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

One or more of the components, steps, and/or functions illustrated in the Figures. may be rearranged and/or combined into a single component, step, or function or embodied in several components, steps, or functions without affecting the operation of the pseudo-random number generation. Additional elements, components, steps, and/or functions may also be added without departing from the invention. The apparatus, devices, and/or components illustrated in the Figures may be configured to perform one or more of the methods, features, or steps described in the Figures. The novel algorithms described herein may be efficiently implemented in software and/or embedded hardware.

Those of skill in the art would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

The various features of the invention described herein can be implemented in different systems without departing from the invention. For example, some implementations of the invention may be performed with a moving or static mobile station (e.g., access terminal) and a plurality of mobile or static base stations (e.g., access points).

It should be noted that the foregoing embodiments are merely examples and are not to be construed as limiting the invention. The description of the embodiments is intended to be illustrative, and not to limit the scope of the claims. As such, the present teachings can be readily applied to other types of apparatuses and many alternatives, modifications, and variations will be apparent to those skilled in the art.

## Claims

1. A method operational in a home network (116) for authenticating communication services for a wireless mobile station (102) roaming in a visited network (104), the method comprising:
receiving (1002) a service request from the visited network (104) for the wireless mobile station (102) to establish a data service requiring a cryptographic key;
determining (1004) whether a cryptographic key for the wireless mobile station (102) is available at the home network (116);
sending (1010) a message to the visited network (104) granting network access to the wireless mobile station (102) if no valid cryptographic key is found at the home network (116) for the requested service but the wireless mobile station (102) is positively verified as a subscriber of the home network (116) and it is roaming in the visited network (104).

2. The method of claim 1, wherein the received service request includes an identifier for the visited network (104) and a unique node identifier for the wireless mobile station (102), the method further comprising:
verifying that the requesting wireless mobile station (102) is a subscriber using its unique node identifier; and
ascertaining that the requesting wireless mobile station (102) is roaming in a visited network (104).

3. A home network node (800) for authenticating communication services for a wireless mobile station (102) roaming in a visited network (104), comprising:
a wireless network interface (804) for communication with the visited network (104); and
a processor (806) coupled to the wireless network interface (804), the processor (806) adapted to:
receive a service request from the visited network (104) for the wireless mobile station (102) to establish a data service requiring a cryptographic key;
determine whether a cryptographic key for the wireless mobile station (102) is available at the home network (116); and
send a message to the visited network (104) granting network access to the wireless mobile station (102) if no valid cryptographic key is found at the home network (116) for the requested service but the wireless mobile station (102) is positively verified as a subscriber of the home network (116) and it is roaming in the visited network (104).

4. The home network node (800) of claim 3, wherein the received service request includes an identifier for the visited network (104) and a unique node identifier for the wireless mobile station (102), the processor (806) further adapted to:
verify that the requesting wireless mobile station (102) is a subscriber using its unique node identifier; and
ascertain that the requesting wireless mobile station (102) is roaming in a visited network (104).

## Patentansprüche

1. Ein Verfahren, betriebsfähig in einem Heimnetzwerk (116), zum Authentifizieren von Kommunikationsdiensten für eine drahtlose Mobilstation (102), die in einem besuchten Netzwerk (104) roamt bzw. Roaming betreibt, wobei das Verfahren folgende Schritte aufweist:
Empfangen (1002) einer Dienstanfrage von dem besuchten Netzwerk (104) für die drahtlose Mobilstation (102) zum Herstellen eines Datendiensts, der einen kryptographischen Schlüssel erfordert,
Bestimmen (1004), ob ein kryptographischer Schlüssel für die drahtlose Mobilstation (102) in dem Heimnetzwerk (116) verfügbar ist,
Senden (1010) einer Nachricht an das besuchte Netzwerk (104), die einen Netzwerkzugriff auf die drahtlose Mobilstation (102) gewährt, wenn kein gültiger kryptographischer Schlüssel in dem Heimnetzwerk (116) für den angefragten Dienst gefunden wird, aber die drahtlose Mobilstation (102) positiv als ein Teilnehmer des Heimnetzwerks (116) verifiziert wird und in dem besuchten Netzwerk (104) roamt.

2. Verfahren nach Anspruch 1, wobei die empfangene Dienstanfrage eine Kennzeichnung für das besuchte Netzwerk (104) und eine eindeutige Knotenkennzeichnung für die drahtlose Mobilstation (102) enthält, wobei das Verfahren weiterhin aufweist:
Verifizieren, dass die anfragende drahtlose Mobilstation (102) ein Teilnehmer ist, der seine eindeutige Knotenkennzeichnung verwendet, und
Feststellen, dass die anfragende drahtlose Mobilstation (102) in einem besuchten Netzwerk (104) roamt.

3. Ein Heimnetzwerkknoten (800) zum Authentifizieren von Kommunikationsdiensten für eine drahtlose Mobilstation (102), die in einem besuchten Netzwerk (104) roamt, wobei der Heimnetzwerkknoten (800) aufweist:
eine drahtlose Netzwerkschnittstelle (804) für eine Kommunikation mit dem besuchten Netzwerk (104), und
einen Prozessor (806), der mit der drahtlosen Netzwerkschnittstelle (804) gekoppelt ist, wobei der Prozessor (806) ausgebildet ist zum:
Empfangen einer Dienstanfrage von dem besuchten Netzwerk (104) für die drahtlose Mobilstation (102) zum Herstellen eines Datendiensts, der einen kryptographischen Schlüssel erfordert,
Bestimmen, ob ein kryptographischer Schlüssel für die drahtlose Mobilstation (102) in dem Heimnetzwerk (116) verfügbar ist, und
Senden einer Nachricht an das besuchte Netzwerk (104), die einen Netzwerkzugriff auf die drahtlose Mobilstation (102) gewährt, wenn kein gültiger kryptographischer Schlüssel in dem Heimnetzwerk (116) für den angefragten Dienst gefunden wird, aber die drahtlose Mobilstation (102) positiv als ein Teilnehmer des Heimnetzwerks (116) verifiziert wird und in dem besuchten Netzwerk (104) roamt.

4. Heimnetzwerkknoten (800) nach Anspruch 3, wobei die empfangene Dienstanfrage eine Kennzeichnung für das besuchte Netzwerk (104) und eine eindeutige Knotenkennzeichnung für die drahtlose Mobilstation (102) enthält, wobei der Prozessor (806) weiterhin ausgebildet ist zum:
Verifizieren, dass die anfragende drahtlose Mobilstation (102) ein Teilnehmer ist, der seine eindeutige Knotenkennzeichnung verwendet, und
Feststellen, dass die anfragende drahtlose Mobilstation (102) in einem besuchten Netzwerk (104) roamt.

## Revendications

1. Procédé opérant dans un réseau de domicile (116) pour authentifier des services de communication pour un poste mobile sans fil (102) en itinérance dans un réseau visité (104), le procédé comprenant :
recevoir (1002) une requête de services provenant du réseau visité (104) pour le poste mobile sans fil (102) pour établir un service de données nécessitant une clé de cryptographie ;
déterminer (1004) si une clé de cryptographie pour le poste mobile sans fil (102) est disponible au niveau du réseau de domicile (116) ;
envoyer (1010) un message au réseau visité (104) accordant un accès réseau au poste mobile sans fil (102) si aucune clé de cryptographie valide n'est trouvée au niveau du réseau de domicile (116) pour le service demandé mais le poste mobile sans fil (102) est vérifié positivement comme étant un abonné du réseau de domicile (116) et est en itinérance dans le réseau visité (104).

2. Procédé selon la revendication 1, dans lequel la requête de service reçue comprend un identificateur pour le réseau visité (104) et un identificateur de noeud unique pour le poste mobile sans fil (102), le procédé comprenant en outre :
vérifier que le poste mobile sans fil (102) faisant la demande est un abonné en utilisant son identificateur de noeud unique ; et
s'assurer que le poste mobile sans fil (102) faisant la requête est en itinérance dans un réseau visité (104).

3. Noeud de réseau de domicile (800) pour authentifier des services de communication pour un poste mobile sans fil (102) en itinérance dans un réseau visité (104), comprenant :
une interface de réseau sans fil (804) pour des communications avec le réseau visité (104) ; et
un processeur (806) couplé à l'interface de réseau sans fil (804), le processeur (806) étant adapté à :
recevoir une requête de service provenant du réseau visité (104) pour le poste mobile sans fil (102) pour établir un service de données nécessitant une clé de cryptographie ;
déterminer si une clé de cryptographie pour le poste mobile sans fil (102) est disponible au niveau du réseau de domicile (116) ; et
envoyer (1010) un message au réseau visité (104) accordant un accès réseau au poste mobile sans fil (102) si aucune clé de cryptographie valide n'est trouvée au niveau du réseau de domicile (116) pour le service demandé mais le poste mobile sans fil (102) est vérifié positivement comme étant un abonné du réseau de domicile (116) et est en itinérance dans le réseau visité (104).

4. Noeud de réseau de domicile (800) selon la revendication 3, dans lequel la requête de service reçue comprend un identificateur pour le réseau visité (104) et un identificateur de noeud unique pour le poste mobile sans fil (102), le processeur (806) étant en outre adapté à :
vérifier que le poste mobile sans fil (102) faisant la demande est un abonné en utilisant son identificateur de noeud unique ; et
s'assurer que le poste mobile sans fil (102) faisant la requête est en itinérance dans un réseau visité (104).
